# EUROPÄISCHE PATENTSCHRIFT

(11) **EP 1 249 625 B1**
(45) Veröffentlichungstag und Bekanntmachung des Hinweises auf die Patenterteilung: **13.01.2010**
(21) Anmeldenummer: 02005185.0
(22) Anmeldetag: 08.03.2002
(51) Int. Cl.: F16D 23/14

(54) **Abdichtung für ein Ausrücklager**
Sealing for a clutch release bearing
Joint pour butée d'embrayage

(30) Priorität: 11.04.2001 DE 10118095
(43) Veröffentlichungstag der Anmeldung: 16.10.2002
(73) Patentinhaber: Schaeffler KG, 91074 Herzogenaurach (DE)
(72) Erfinder: Klöpfer, Bernhard, 91438 Bad Windsheim (DE); Dittmer, Steffen, 91074 Herzogenaurach (DE); Winkelmann, Ludwig, 91056 Erlangen (DE)

(56) Entgegenhaltungen:
- WO-A-98/06957
- US-A- 3 604 545
- US-A- 4 509 764
- US-A- 4 561 788
- PATENT ABSTRACTS OF JAPAN vol. 017, no. 704 (C-1146), 22. Dezember 1993 (1993-12-22) & JP 05 239439 A (NIPPON REINZ CO LTD;OTHERS: 02), 17. September 1993 (1993-09-17)

## Beschreibung

### Gebiet der Erfindung

Die vorliegende Erfindung bezieht sich auf ein Ausrücklager einer Betätigungseinrichtung für eine in Fahrzeugen eingesetzte Schalttrennkupplung, die zwischen einer Brennkraftmaschine und einem schaltbaren Zahnräderwechselgetriebe eingesetzt ist. Das Ausrücklager umfasst einen drehstarr angeordneten, mittels eines Ringbodens an der Betätigungseinrichtung abgestützten Lagerring sowie einen umlaufenden Lagerring, an dessen Ringboden ein Federmittel, insbesondere Tellerfederzungen der Schalttrennkupplung abgestützt ist. Zwischen den Lagerringen geführte Wälzkörper sind beidseitig mit an den Lagerringen angeordneten Abdichtungen versehen.

### Hintergrund der Erfindung

Zur Abdichtung derartiger Ausrücklager, die einen Eintritt von Verunreinigungen in das Ausrücklager sowie einen Austritt des Schmiermittels aus dem Ausrücklager wirksam verhindern sollen, sind verschiedene Lösungsansätze bekannt.

Die DE 34 14 106 C1 zeigt eine Abdichtung, die eine an dem Außenring befestigte Dichtscheibe umfasst, welche sich radial unter Einhaltung eines Ringspaltes bis an die Mantelfläche des Innenrings erstreckt. Diese Dichtscheibe gewährleistet keine ausreichende Abdichtung gegenüber dem Abrieb, welcher im Bereich der Anlagefläche der Tellerfederzungen an dem Ausrücklager entsteht sowie dem von der Mitnehmerscheibe der Schalttrennkupplung in das Kupplungsgehäuse eintretenden Abrieb. Staubpartikel dieses Abriebs gelangen über den Dichtspalt des Ausrücklagers in den Laufbahnbereich der Wälzkörper, was sich nachteilig auf den Verschleiß und damit auf die Lebensdauer des Ausrücklagers auswirkt.

Die DE 197 09 056 A1 bezieht sich auf eine armierte Dichtscheibe, welche in einer Ringnut des drehstarr angeordneten äußeren Lagerrings positioniert ist. Innenseitig bildet die Dichtscheibe zwei Dichtlippen, deren innere Dichtlippe schleifend an einer Wandung des umlaufenden Innenrings anliegt. Die weitere vorgelagerte Dichtlippe ist unter Einhaltung eines Ringspaltes beabstandes zum Innenring angeordnet und hat die Funktion einer Vordichtung. Die schleifende Dichtung verursacht ein Reibmoment, verbunden mit einer nachteiligen Temperaturerhöhung des gesamten Ausrücklagers, wodurch Temperaturgrenzwerte des Ausrücklagers überschritten werden, die zu einem Ausfall des Ausrücklagers führen.

US 3,604,545 A offenbart ein selbstjustierendes Rillenkugellager mit Schwingungsdämpfung. Um eine axiale Spielfreiheit zu erreichen wird der Außenring mittelbar über dichtende Elemente, nämlich einen O-Ring und einen Dichtungsfilzstreifen, in radialer Richtung bewegt und von einem Abdeckring mit dem O-Ring auf den Gehäuseflansch gedrückt.

Die zuvor genannten Nachteile der bekannten Abdichtungen von Ausrücklagern vermeidend, ist es Aufgabe der vorliegenden Erfindung, eine zuverlässige Abdichtung zu realisieren, die einen nachteiligen Eintritt von Verunreinigung in das Ausrücklager verhindert und eine Wartfähigkeit des Fahrzeugs ermöglicht, ohne ein nachteiliges, das Temperaturniveau des Ausrücklagers erhöhendes Reibmoment.

Erfindungsgemäß wird die zuvor genannte Problemstellung durch eine elastische Dichtscheibe gelöst, die einen Ringspalt zwischen dem drehstarr angeordnenten sowie dem umlaufenden Lagerring abdichtet. Für die erfindungsgemäße Dichtscheibe ist ein Werkstoff mit einer geringen Dichte vorgesehen, der sich der Kontur des Dichtspaltes anpasst, d.h. vorteilhaft bleibend verformt bzw. leicht umformbar ist und und dabei eine hohe Abdichtgüte gewährleistet, ohne ein nachteiliges Reibmoment zu erzeugen. Der sich mittelbar oder unmittelbar zwischen den Lagerringen des Ausrücklagers bildende Dichtspalt ist dabei kleiner dimensioniert als die Dicke bzw. Wandstärke der Dichtscheibe. Damit ist sichergestellt, dass die Dichtscheibe im eingebauten Zustand im Bereich des Ringspaltes vorgespannt eingesetzt ist. Die erfindungsgemäße Dichtscheibe gewährleistet eine zuverlässige Abdichtung des Ausrücklagers und einen Schutz gegenüber einem Schmutzmitteleintritt und/oder Flüssigkeitseintritt. Die erfindungsgemäße Dichtscheibe hält auch extremen Einsätzen stand, wie zum Beispiel Wasserdurchfahrten mit geländegängigen Fahrzeugen. Weiterhin ermöglicht die Dichtscheibe eine kostengünstige automatisch erfolgende Montage.

Weitere vorteilhafte Ausgestaltungen der Erfindung sind Gegenstand der abhängigen Ansprüche 2 bis 18.

Eine bevorzugte Ausführungsform der Erfindung sieht vor, dass die Dichtscheibe in einer Einbaulage zwischen dem Ringboden des drehstarren äußeren Lagerrings bzw. zwischen dessen Vorspannfeder und einem drehstarr an einem äußeren Lagerring befestigten Halteblech lagefixiert ist. Die Dichtscheibe erstreckt sich von der eingespannten Position ausgehend radial nach innen und dichtet dabei den Ringspalt ab, welcher axial von der Vorspannfeder und der Stirnseite des umlaufenden, inneren Lagerrings begrenzt ist. Aufgrund der mit Übermaß ausgelegten Dichtscheibe bezogen auf das Maß des Ringspaltes wird die Dichtscheibe im Bereich des umlaufenden Innenrings eingeschnürt. Dabei bildet sich ein begrenzter überlappter Kontaktbereich zwischen dem umlaufenden Lagerring und der Dichtscheibe, der gleichzeitig eine Verlängerung der Dichtfuge zwischen diesen Bauteilen vorteilhaft verlängert.

Die lagefixierte Anordnung der Dichtscheibe an dem drehstarren Lagerring verhindert ein nachteiliges Umlaufen der Dichtscheibe und einem damit verbunden Flusen oder Ausfransen des Dichtscheibenwerkstoffes. Der Eintrag von derartigen Dichtscheibenbestandteilen in das Ausrücklager, insbesondere auf die Laufbahn der Wälzkörper führt zu einem erhöhten Verschleiß und zu einem vorzeitigen Ausfall des Ausrücklagers.

Durch den lagefixierten Einbau der Dichtscheibe zwischen dem Halteblech und der Vorspannfeder bzw. dem Ringboden des Lagerrings ist die Dichtscheibe gleichzeitig zentriert und damit ein definierter Einbau sichergestellt.

Für die Dichtscheibe ist gemäß der Erfindung ein verschleißfester Werkstoff geringer Dichte vorgesehen, der vorteilhaft eine reibungsarme Abdichtung sicherstellt. Als bevorzugter Werkstoff für die Dichtscheibe eignet sich Filz. Ebenso ist eine aus einem Flies hergestellte Dichtscheibe einsetzbar oder eine Schaumstoff-Dichtscheibe.

Gemäß der Erfindung ist vorgesehen die Dichtscheibe aus einem asbestfreien Fasermaterial einzusetzen, dass mit einem NBR oder HNBR-Bindemittel versetzt ist. Eine derartige Dichtscheibe verbessert die elastische Nachgiebigkeit, insbesondere bei höheren Temperaturen. Gleichzeitig reduziert dieser Werkstoff die Flusenbildung bei der Konfektionierung bzw. dem Ausstanzen der Dichtscheibe.

Neben den zuvor genannten Werkstoffen schließt die Erfindung ebenfalls weitere geeignete Werkstoffe ein, die sich für die erfindungsgemäße Dichtscheibenanordnung eignen, und die geforderten Eigenschaften hinsichtlich Verschleiß, Dichte und Reibungsverhalten aufweisen.

Ein für die Dichtscheibe vorgesehener Filz weist vorzugsweise eine Dichte von ≧ 20 g/cm² auf. Ein derartiger Filz ermöglicht eine optimale Anpassung an dem mittelbar oder unmittelbar zwischen den Lagerringen sich bildenden Ringspalt.

Im eingebauten Zustand verursacht eine aus einem derartigen Werkstoff hergestellte Dichtscheibe kein nachteiliges Reibmoment, sowie keine unzulässige Temperaturerhöhung des Ausrücklagers.

Für die Dimensionierung der erfindungsgemäßen Dichtscheibe ist eine Wandstärke vorgesehen, die das Ringspaltmaß mit einem Faktor ≧ 0,01 übertrifft. Diese Auslegung sichert im eingebauten Zustand und bei einer Verlagerung der Lagerringe im Betriebszustand stets eine ausreichende, vorgespannte Anlage der Dichtscheibe an den Bauteilen, die den Ringspalt begrenzen. Außerdem gewährleistet die mit dem Übermaß in den Ringspalt eingepasste Dichtscheibe einen Ausgleich von fertigungsbedingten Toleranzen des Ausrücklagers, insbesondere den Bauteilen, die den Ringspalt begrenzen.

Eine weitere vorteilhafte Ausgestaltung der Erfindung sieht vor, die Dichtscheibe aus Filz mit einem Imprägniermittel zu behandeln. Vorzugsweise wird bereits der Werkstoff bei der Herstellung des Halbzeuges entsprechend behandelt, um die Kapilarwirkung insbesondere gegenüber Wasser wirksam zu unterbinden.

Weiterhin schließt die Erfindung ein Befetten der Dichtscheibe vorzugsweise im Kontaktbereich mit dem Halteblech ein. Diese Maßnahme vereinfacht die Montage, in dem die Befettung gleichzeitig als Haftmittel für die Dichtscheibe an dem Halteblech nutzbar ist. Weiterhin dient die Befettung als eine Grundversorgung der Dichtscheibe mit einem Schmierstoff, da aufgrund einer Dochtwirkung das Fett in das Gewebe der Dichtscheibe eindringt. In dem Kontaktbereich der Dichtscheibe mit dem umlaufenden Lagerring dient der Schmierstoff gleichzeitig als Gleitmittel und verringert vorteilhaft das Reibmoment.

Die Ausgestaltung der Erfindung zur Erzielung einer verbesserten Abdichtung schließt auch die konstruktive Gestaltung des umlaufenden Lagerrings ein. Zur Erzielung einer gewollten Umlenkung von Verunreinigungen an der Innenkontur des umlaufenden Lagerrings ist dieser auf der von den Wälzkörpern abgewandten Seite am freien Ende mit einem konischen Ansatz versehen. Dieser von der Stirnseite, dem freien Ende, ausgehende sich konisch verjüngende Ansatz reduziert den Durchmesser des Lagerrings, verbunden mit einer verringerten Umsatzgeschwindigkeit. Diese geometrische Ausbildung hat zur Folge, dass auf die Innenseite des umlaufenden Lagerrings auftreffende Schmutzpartikel aufgrund der Zentrifugalkraft in die Zone der größten Umsatzgeschwindigkeit gelangen und sich damit von dem konischen Ansatz entfernen. Diese Maßname verringert entscheidend eine Beaufschlagung des Ringspaltes und verbessert damit die Abdichtung des Ausrücklagers.

Alternativ zu einem endseitig konisch gestalteten, umlaufenden Lagerring oder zusätzlich dazu, schließt die Erfindung weiterhin ein Halteblech ein, welches mit einer radial in Richtung des Innenrings weisenden Spritzkante versehen ist. Eine diesen Bereich gegenüberliegende Nut mit Spritzkanten unterstützt die Wirkung zum Abweisen von eindringen Schmutz- und Flüssigkeitspartikeln. Ein derartig gestaltetes Halteblech bildet damit eine der Dichtscheibe nachgeschaltete weitere Abdichtmaßnahme, die gemeinsam ein Labyrinth bilden.

Zum verbesserten Händling bei der automatisierten Montage wird erfindungsgemäß vorgeschlagen, die Dichtscheibe mit dem Halteblech zu verkleben. Das Aufbringen des Klebers auf das Halteblech kann durch Sprühen oder im Tampo-Verfahren erfolgen. Durch anschließendes Andrücken ist die Dichtscheibe lagefixiert und kann nach dem Aushärten des Klebstoffes problemlos zusammen mit dem Halteblech der Montagelinie zugeführt werden.

Die Ausgestaltung der Erfindung sieht weiterhin vor, die Dichtscheibe auf der Seite zu beschichten, die der Vorspannfeder zugeordnet ist. Dazu eignet sich besonders ein dünnwandiges Trägerelement. Dieses auch als Armierung dienende Trägerelement kann beispielsweise in Form einer einseitigen Klebeschicht erfolgen, die mit einer Abdeckfolie versehen ist. Alternativ dazu eignet sich eine dünne, reißfeste Gewebeschicht oder eine Metallfolie. Nach Entfernen der Folie kann mit der Klebeschicht eine dauerhafte Einbauposition der Dichtscheibe erreicht werden.

Die zuvor beschriebene Beschichtung der Dichtscheibe verbessert die Festigkeit, insbesondere Formstabilität und ermöglicht eine automatisierte Montage, beispielsweise mittels eines Saugkopfes. Erfindungsgemäß bietet es sich an, die erfindungsgemäße Dichtscheibe in Rollenform aufgereiht oder direkt vorgestanzt auf einem Keul aufgewickelt, anzuliefern.

Gemäß der Erfindung ist außerdem vorgesehen, die Dichtscheibe unmittelbar kraftschlüssig und unlösbar an dem Halteblech zu befestigen. Zur Befestigung eignet sich dabei insbesondere eine Klebung. Alternativ schließt die Erfindung weiterhin eine an der Vorspannfeder befestigte Dichtscheibe ein, wobei hierzu vorzugsweise ebenfalls eine Klebung vorgesehen ist.

### Kurze Beschreibung der Zeichnungen

Nachstehend wird die Erfindung anhand von zwei Ausführungsbeispielen näher erläutert. Es zeigen:
- Figur 1: in einem Halbschnitt das erfindungsgemäße Ausrücklager im einbauten Zustand;
- Figur 2: einen Ausschnitt in einem vergrößerten Maßstab des in Figur 1 abgebildeten Ausrücklagers.

### Detaillierte Beschreibung der Zeichnungen

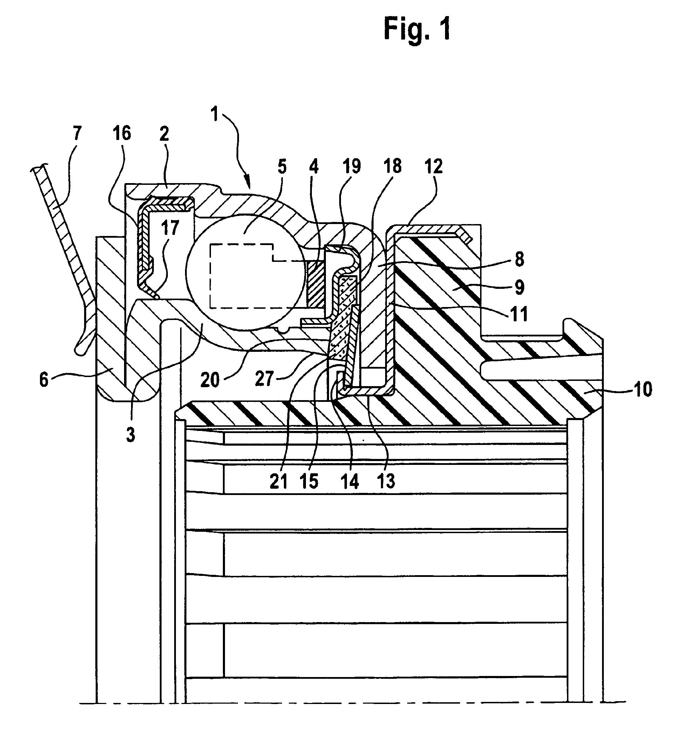

In der Figur 1 ist mit der Bezugsziffer 1 das als Schrägschulterlager gestaltete Ausrücklager 1 abgebildet, welches einen drehstarr angeordneten äußeren Lagerring 2 und einen inneren umlaufenden Lagerring 3 umfasst. Zwischen den Lagerringen 2, 3 sind in einem Käfig 4 geführte Wälzköper 5 angeordnet. An dem Ringboden 6 des inneren Lagerrings 3 ist ein Federmittel 7 einer in Figur 1 nicht abgebildeten Schalttrennkupplung abgestützt. Der äußere, drehstarre Lagerring 2 ist mit dem Ringboden 8 mittelbar an der Schulter 9 des Gehäuses 10 abgestützt. Zur Erzielung einer lagefixierten Befestigung des Ringbodens 8 an dem Gehäuse 10 dient ein Bördelring 11, welcher eine zum Ausrücklager 1 gerichtete Stirnseite vollständig abdeckt und mittels eines Bördelkragens 12 lage- und drehfixiert an der Schulter 9 befestigt ist. Der Bördelring 11 bildet innenseitig eine u-förmige Aufnahme 13, deren Breite sich über die Wandstärke des Ringbodens 8 erstreckt. An einem Bord 14 der Aufnahme 13 stützt sich die Vorspannfeder 15 über eine Innenkontur ab. Die als Tellerfeder gestaltete Vorspannfeder 15 stützt sich außenseitig kraftschlüssig an dem Ringboden 8 ab.

Das Ausrücklager 1 ist beidseitig der Wälzkörper 5 mit Abdichtungen versehen. Auf der zum Federmittel 7 gerichteten Seite ist ein am Lagerring 2 befestigter Dichtring 16 angeordnet, dessen Dichtlippe 17 an dem inneren Lagerring 3 abgestützt ist. Auf der Gegenseite ist das Ausrücklager 1 mit einer Dichtscheibe 18 versehen, welche außenseitig zwischen einem am Lagerring 2 befestigten Halteblech 19 und der Vorspannfeder 15 verdrehgesichert befestigt ist. Innenseitig ist die Dichtscheibe 18 in einem axial von der Stirnseite 20 des Lagerrings 3 und der Vorspannfeder 15 begrenzten Ringspalt 21 angeordnet.

Der Lagerring 3 ist an dem freien Ende mit einem radial in Richtung des Gehäuses 10 ausgerichteten konischen Ansatz 27 versehen. Von dem freien Ende des Lagerrings 3, der Stirnseite 20 ausgehend, verjüngt sich der Ansatz 27. Diese Maßnahme bewirkt, dass Schmutzpartikel, die auf die Innenseite des Lagerrings 3 treffen, sich vom Ansatz 27 axial in Richtung des Ringbodens 6 des Lagerrings 3 verlagern, aufgrund der Zentrifugalkraft, die im Bereich des Ansatzes 27, aufgrund des geringeren Innendurchmessers kleiner ist und sich synchron zu der Durchmesseränderung des Lagerrings 3 vergrößert.

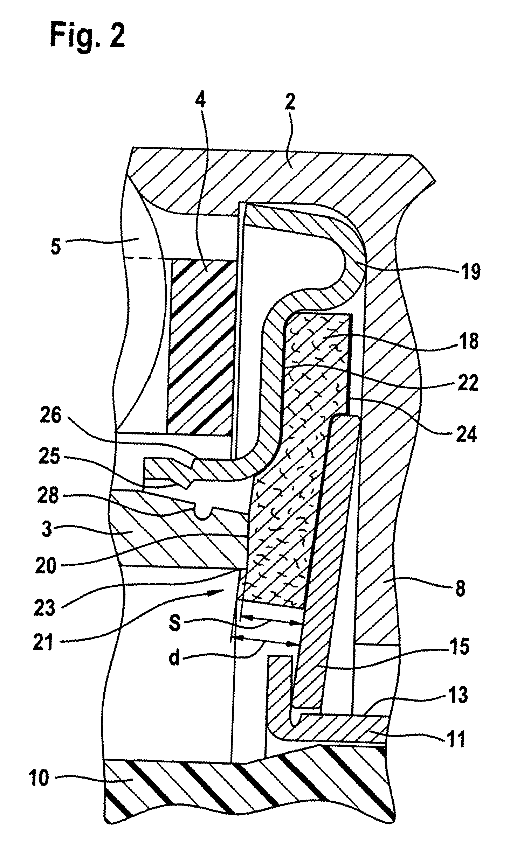

Die Figur 2 verdeutlicht insbesondere die Anordnung und Gestaltung der Dichtscheibe 18. Die aus einem elastischen Material insbesondere Filz hergestellte Dichtscheibe 18 ist im Außenbereich zwischen dem Halteblech 19 und der Vorspannfeder 15 lagefixiert. Die Figur 2 verdeutlicht die in der Einbaulage teilweise verformte bzw. verpresste Dichtscheibe 18, welche über einen Kontaktbereich 22 an dem Halteblech 19 anliegt. Zur Montagevereinfachung bietet es sich an, den Kontaktbereich 22 zu befetten, um damit die Dichtscheibe 18 am Halteblech 19 zu fixieren. Im eingebauten Zustand wird die Dichtscheibe 18 mit der Wandstärke "d" entsprechend dem Abstandsmaß "s" des Ringspaltes 21 eingeschnürt bzw. verpresst. Aufgrund der geringen Dichte des Werkstoffs, aus dem die Dichtscheibe 18 hergestellt ist, bewirkt die Einschnürung bzw. Verpressung der Dichtscheibe 18 im Bereich des Ringspaltes 21 keine nachteilig hohe Anpresskraft an der Stirnseite 20 des Lagerrings 3 aus. Folglich verursacht die Abstützung der Dichtscheibe 18 an dem Lagerring 3 ein geringes, vernachlässigbares Reibmoment, und damit keine nachteilige Temperaturerhöhung des Ausrücklagers 1.

Wie dargestellt, ergibt sich im eingebauten Zustand eine Überlappung 23 zwischen dem Lagerring 3 und der Dichtscheibe 18, wodurch sich ein vergrößerter Abstützbereich der Dichtscheibe 18 an dem Lagerring 3 einstellt und damit die Abdichtqualität verbessert. Als Maßnahme zur Verbesserung der Formstabilität der Dichtscheibe 18, ist diese auf der zur Vorspannfeder 15 weisenden Seite mit einer Trägerschicht 24 versehen. Dazu eignet sich beispielsweise eine Abdeckfolie mit einer einseitigen Klebeschicht, die zur Verbesserung einer Lagefixierung der Dichtscheibe 18 an der Vorspannfeder 15 nutzbar ist. Alternativ bietet es sich an, als Trägerschicht 24 eine reißfeste Gewebeschicht oder Metallfolie vorzusehen. Das Halteblech 19 weist gemäß Figur 2 eine Spritzkante 25 auf, die an dem zylindrischen bzw. axial ausgerichteten Kragen 26 angeordnet ist und in Richtung des Lagerrings 3 einen umlaufenden radial nach innen gerichteten Vorsprung bildet. Die Spritzkante 25 hat die Aufgabe, Verunreinigungen oder Schmutzpartikel, die den von der Dichtscheibe 18 abgedichteten Ringspalt 21 passieren, von der Laufbahn der Wälzkörper 5 fern zu halten. Der innere Lagerring 3 ist in dem zur Dichtscheibe 18 gerichteten Endbereich, axial zur Stirnseite 20 beabstandet mit einer umlaufenden Nut 28 versehen. Diese seitliche scharfkantige Übergänge bildende Nut 28 bewirkt, dass eine den Ringspalt 21 überwindende Flüssigkeit von dem umlaufendem Lagerring 3 abgeschleudert wird und damit die Wirkung der Dichtscheibe 18 unterstützt.

### Bezugszahlenliste

- 1: Ausrücklager
- 2: Lagerring
- 3: Lagerring
- 4: Käfig
- 5: Wälzkörper
- 6: Ringboden
- 7: Federmittel
- 8: Ringboden
- 9: Schulter
- 10: Gehäuse
- 11: Bördelring
- 12: Bördelkragen
- 13: Aufnahme
- 14: Bord
- 15: Vorspannfeder
- 16: Dichtring
- 17: Dichtlippe
- 18: Dichtscheibe
- 19: Halteblech
- 20: Stirnseite
- 21: Ringspalt
- 22: Kontaktbereich
- 23: Überlappung
- 24: Trägerschicht
- 25: Spritzkante
- 26: Kragen
- 27: Ansatz
- 28: Nut

## Patentansprüche

1. Ausrücklager für eine Betätigungseinrichtung, die für eine in Fahrzeugen eingesetzte Schalttrennkupplung vorgesehen ist, umfassend einen drehstarr angeordneten, mittels eines Ringbodens (8) an einem Gehäuse (10) der Betätigungseinrichtung abgestützten Lagerrings (2) sowie einen umlaufenden Lagerring (3), an dessen Ringboden (6) ein Federmittel (7) der Schalttrennkupplung abgestützt ist und zwischen den Lagerringen (2, 3) geführte Wälzkörper (5) beidseitig mit Abdichtungen versehen sind, **dadurch gekennzeichnet, dass** zumindest eine Abdichtung eine elastische Dichtscheibe (18) umfasst und die Dichtscheibe (18) mit einem Übermaß in einen Ringspalt (21) eingesetzt ist, wobei der Ringspalt (21) sowohl von den Lagerringen (2, 3) mittelbar oder unmittelbar begrenzt ist, als auch axial von einer Stirnseite (20) des umlaufenden Lagerrings (3) und einer Vorspannfeder (15) begrenzt ist.

2. Ausrücklager nach Anspruch 1, dessen Dichtscheibe (18) in einer Einbaulage zwischen dem Ringboden (8) des drehstarren Lagerringes (2) bzw. dessen Vorspannfeder (15) und dem an dem drehstarren Lagerring (2) befestigten Halteblech (19) lagefixiert ist, wobei die Dichtscheibe (18) einen Ringspalt (21) abdichtet, der axial von einer Stirnseite (20) des umlaufenden Lagerrings (3) und einer den Ringboden (8) des drehstarren Lagerrings (2) an das Gehäuse (10) beaufschlagenden Vorspannfeder (15) begrenzt ist.

3. Ausrücklager nach Anspruch 1, wobei die Dichtscheibe (18) aus einem verschleißfesten und reibungsarmen Werkstoff geringer Dichte hergestellt ist.

4. Ausrücklager nach Anspruch 3, wobei eine aus Filz hergestellte Dichtscheibe (18) eingesetzt ist.

5. Ausrücklager nach Anspruch 3, wobei eine aus Flies hergestellte Dichtscheibe (18) vorgesehen ist.

6. Ausrücklager nach Anspruch 3, versehen mit einer aus Schaumstoff hergestellten Dichtscheibe (18).

7. Ausrücklager nach Anspruch 3, wobei zur Herstellung der Dichtscheibe (18) ein asbestfreies Fasermaterial mit einem NBR oder HNBR-Bindemittel eingesetzt ist.

8. Ausrücklager nach Anspruch 4, wobei für die Dichtscheibe ein Filz mit einer Dichte von ≥ 20 g/m² vorgesehen ist.

9. Ausrücklager nach Anspruch 1, wobei die Dichtscheibe (18) eine Wandstärke "d" aufweist, die das Maß "s" des Ringspaltes (21) mit einem Faktor von ≥ 0,01 übertrifft.

10. Ausrücklager nach Anspruch 1, wobei die Dichtscheibe (18) mit einem Imprägniermittel behandelt ist.

11. Ausrücklager nach Anspruch 1, dessen Dichtscheibe (18) in einem dem Halteblech (19) zugewandten Kontaktbereich (22) befettet ist.

12. Ausrücklager nach Anspruch 1, wobei der umlaufende, innere Lagerring (3) in einem dem Ringspalt (21) benachbarten Endbereich innenseitig von der Stirnseite (20) ausgehend sich konisch verjüngt.

13. Ausrücklager nach Anspruch 1, wobei das an dem drehstarr angeordneten Lagerring (2) befestigte Halteblech (19) an einem axial ausgerichteten, zylindrischen Kragen (26) eine zum inneren Lagerring (3) weisende umlaufende Spritzkante (25) aufweist.

14. Ausrücklager nach Anspruch 1, wobei die Dichtscheibe (18) zumindest auf der zu der Vorspannfeder (15) gerichteten Seite beschichtet ist.

15. Ausrücklager nach Anspruch 14, wobei zur Beschichtung die Dichtscheibe (18) eine als Armierung dienende Trägerschicht (24) vorgesehen ist.

16. Ausrücklager nach Anspruch 15, wobei als Trägerschicht (24) für die Dichtscheibe (18) eine Metallfolie oder eine Gewebeschicht vorgesehen ist.

17. Ausrücklager nach Anspruch 1, wobei die Dichtscheibe (18) mit dem Halteblech (19) kraftschlüssig, unlösbar verbunden ist.

18. Ausrücklager nach Anspruch 1, wobei die Dichtscheibe (18) an der Vorspannfeder (15) kraftschlüssig, unlösbar befestigt ist.

## Claims

1. Clutch release bearing for an actuating device which is provided for a separating clutch used in vehicles, comprising a rotationally fixedly arranged bearing ring (2) which is supported by means of an annular base (8) on a housing (10) of the actuating device, and also comprising a rotating bearing ring (3), on the annular base (6) of which is supported a spring means (7) of the separating clutch, and rolling bodies (5) which are guided between the bearing rings (2, 3) are provided at both sides with seals, **characterized in that** at least one seal comprises an elastic sealing disc (18) and the sealing disc (18) is inserted with an oversize into an annular gap (21), with the annular gap (21) being both bounded indirectly or directly by the bearing rings (2, 3) and also bounded axially by an end side (20) of the rotating bearing ring (3) and a preload spring (15).

2. Clutch release bearing according to Claim 1, the sealing disc (18) of which clutch release bearing is positionally fixed in an installation position between the annular base (8) of the rotationally fixed bearing ring (2), or the preload spring (15) thereof, and the retaining plate (19) which is fastened to the rotationally fixed bearing ring (2), with the sealing disc (18) sealing off an annular gap (21) which is bounded axially by an end side (20) of the rotating bearing ring (3) and a preload spring (15) which loads the annular base (8) of the rotationally fixed bearing ring (2) against the housing (10).

3. Clutch release bearing according to Claim 1, with the sealing disc (18) being produced from a low-density, wear-resistant and low-friction material.

4. Clutch release bearing according to Claim 3, with a sealing disc (18) produced from felt material being used.

5. Clutch release bearing according to Claim 3, with a sealing disc (18) produced from nonwoven material being provided.

6. Clutch release bearing according to Claim 3, provided with a sealing disc (18) produced from foamed material.

7. Clutch release bearing according to Claim 3, with an asbestos-free fibre material with an NBR or HNBR binding agent being used to produce the sealing disc (18).

8. Clutch release bearing according to Claim 4, with a felt material with a density ≥ 20 g/m² being provided for the sealing disc.

9. Clutch release bearing according to Claim 1, with the sealing disc (18) having a wall thickness "d" which exceeds the dimension "s" of the annular gap (21) by a factor of ≥ 0.01.

10. Clutch release bearing according to Claim 1, with the sealing disc (18) being treated with an impregnating agent.

11. Clutch release bearing according to Claim 1, the sealing disc (18) of which is greased in a contact region (22) facing towards the retaining plate (19).

12. Clutch release bearing according to Claim 1, with the rotating inner bearing ring (3) tapering conically, at the inside and proceeding from the end side (20), in an end region adjacent to the annular gap (21).

13. Clutch release bearing according to Claim 1, with the retaining plate (19) which is fastened to the rotationally fixedly arranged bearing ring (2) having, on an axially aligned cylindrical collar (26), an encircling spray edge (25) which points towards the inner bearing ring (3).

14. Clutch release bearing according to Claim 1, with the sealing disc (18) being coated at least on the side facing towards the preload spring (15).

15. Clutch release bearing according to Claim 14, with a support layer (24) which serves as a reinforcement being provided for coating the sealing disc (18).

16. Clutch release bearing according to Claim 15, with a metal foil or a fabric layer being provided as a support layer (24) for the sealing disc (18).

17. Clutch release bearing according to Claim 1, with the sealing disc (18) being non-detachably connected in a non-positively locking manner to the retaining plate (19).

18. Clutch release bearing according to Claim 1, with the sealing disc (18) being non-detachably fastened in a non-positively locking manner to the preload spring (15).

## Revendications

1. Butée d'embrayage pour dispositif d'actionnement prévu dans l'embrayage de changement de rapports utilisé dans des véhicules, comprenant :
un anneau de palier (2) disposé de manière à ne pas pouvoir tourner et soutenu au moyen d'un fond annulaire (8) sur un boîtier (10) du dispositif d'actionnement,
un anneau périphérique de palier (3) sur le fond annulaire (6) duquel s'appuie un moyen élastique (7) de l'embrayage de changement de rapports,
des corps de roulement (5) guidés entre les anneaux de palier (2, 3) étant dotés de part et d'autre de joints d'étanchéité,
**caractérisée en ce que**
au moins un joint d'étanchéité comprend un disque élastique d'étanchéité (18),
**en ce que** le disque élastique (18) est inséré avec un surdimensionnement dans un interstice annulaire (21) et
**en ce que** l'interstice annulaire (21) est délimité directement ou indirectement par les anneaux de palier (2, 3) et axialement par un côté frontal (20) de l'anneau périphérique de palier (3) et par un ressort de précontrainte (15).

2. Butée d'embrayage selon la revendication 1, dont le disque d'étanchéité (18) est immobilisé en position de montage entre le fond annulaire (8) de l'anneau de palier (2) empêché de tourner ou son ressort de précontrainte (15) et la tôle de maintien (19) fixée sur l'anneau de palier (2) empêché de tourner, le disque d'étanchéité (18) assurant l'étanchéité d'un interstice annulaire (21) délimité axialement par un côté frontal (20) de l'anneau périphérique de palier (3) et par un ressort de précontrainte (15) qui repousse contre le boîtier (10) le fond annulaire (8) de l'anneau de palier (2) empêché de tourner.

3. Butée d'embrayage selon la revendication 1, dans laquelle le disque d'étanchéité (18) est réalisé en un matériau résistant à l'usure, à faible frottement et à basse densité.

4. Butée d'embrayage selon la revendication 3, dans laquelle le disque d'étanchéité (18) utilisé est réalisé en feutre.

5. Butée d'embrayage selon la revendication 3, dans laquelle le disque d'étanchéité (18) est réalisé en non tissé.

6. Butée d'embrayage selon la revendication 3, dotée d'un disque d'étanchéité (18) réalisé en un matériau moussé.

7. Butée d'embrayage selon la revendication 3, dans laquelle, pour la fabrication du disque d'étanchéité (18), on utilise un matériau fibreux exempt d'amiante, avec un liant NBR ou HNBR.

8. Butée d'embrayage selon la revendication 4, dans laquelle on prévoit pour le disque d'étanchéité un feutre d'une masse spécifique ≥ 20 g/m².

9. Butée d'embrayage selon la revendication 1, dans laquelle le disque d'étanchéité (18) présente une épaisseur de paroi "d" qui dépasse d'un facteur ≥ 0,01 la dimension "s" de l'interstice annulaire (21).

10. Butée d'embrayage selon la revendication 1, dans laquelle le disque d'étanchéité (18) est traité à l'aide d'un agent d'imprégnation.

11. Butée d'embrayage selon la revendication 1, dont le disque d'étanchéité (18) est graissé dans une zone de contact (22) tournée vers la tôle de maintien (19).

12. Butée d'embrayage selon la revendication 1, dans laquelle, partant du côté frontal (20), l'anneau intérieur périphérique de palier (3) se rétrécit coniquement du côté intérieur dans une partie d'extrémité voisine de l'interstice annulaire (21).

13. Butée d'embrayage selon la revendication 1, dans laquelle la tôle de maintien (19) fixée sur l'anneau de palier (2) empêché de tourner présente sur un collet cylindrique (26) orienté axialement une arête périphérique en relief (25) tournée vers l'anneau intérieur de palier (3).

14. Butée d'embrayage selon la revendication 1, dans laquelle le disque d'étanchéité (18) est revêtu au moins sur le côté orienté vers le ressort de précontrainte (15).

15. Butée d'embrayage selon la revendication 14, dans laquelle une couche de support (24) qui sert d'armature est prévue pour revêtir le disque d'étanchéité (18).

16. Butée d'embrayage selon la revendication 15, dans laquelle une feuille métallique ou une couche de tissu sont prévues comme couche de support (24) pour le disque d'étanchéité (18).

17. Butée d'embrayage selon la revendication 1, dans laquelle le disque d'étanchéité (18) est relié de manière non libérable à la tôle de maintien (19) par correspondance mécanique.

18. Butée d'embrayage selon la revendication 1, dans laquelle le disque d'étanchéité (18) est fixé de manière non libérable au ressort de précontrainte (15) par correspondance mécanique.
